(19) Europäisches Patentamt
European Patent Office
Office européen des brevets

(11) Veröffentlichungsnummer: **0 622 385 A2**

# (12) EUROPÄISCHE PATENTANMELDUNG

(21) Anmeldenummer: **94106321.6**

(22) Anmeldetag: **22.04.94**

(51) Int. Cl.[5]: **C08F 283/10**, C09D 11/00

(30) Priorität: **30.04.93 DE 4314298**

(43) Veröffentlichungstag der Anmeldung:
**02.11.94 Patentblatt 94/44**

(84) Benannte Vertragsstaaten:
**AT BE CH DE DK ES FR GB GR IE IT LI NL PT SE**

(71) Anmelder: **HOECHST AKTIENGESELLSCHAFT**

**D-65926 Frankfurt (DE)**

(72) Erfinder: **Giencke, Astrid, Dr.**
**Sachsenring 12**
**D-65719 Hofheim (DE)**
Erfinder: **Kiehl, Robert**
**Teplitzstrasse 15**
**D-65203 Wiesbaden (DE)**
Erfinder: **Walz, Gerd, Dr.**
**Pfingstbornstrasse 99**
**D-65207 Wiesbaden (DE)**
Erfinder: **Mergardt, Bernd, Dr.**
**Waldbachstrasse 77**
**D-65347 Eltville (DE)**

## (54) Polymermischungen.

(57) Polymermischungen aus mindestens einem aminogruppenhaltigen Polymer A) und mindestens einem Polymer B) aus ethylenisch ungesättigten Monomeren, erhalten durch Umsetzung eines Epoxids mit einem Amin in Gegenwart der ethylenisch ungesättigten Monomeren und anschließende radikalische Polymerisation. Diese Polymermischungen werden zur Herstellung von Bindemittelträgern für Druckfarben und Drucklacken auf Wasserbasis eingesetzt.

EP 0 622 385 A2

Die Erfindung betrifft Polymermischungen mit bi- oder multimodalem Aufbau, die als Bestandteil von wäßrigen Bindemittelträgern für Druckfarben und Drucklacke Verwendung finden.

Zur Applikation von Bindemitteln auf Bedruckstoffe wird in Zukunft statt mit organischen Lösungsmitteln verstärkt mit Wasser gearbeitet werden müssen, da neben Preis und Verfügbarkeit besonders auch ökologische und arbeitshygienische Gesichtspunkte immer stärker ins allgemeine Bewußtsein rücken. Die Wasserverdünnbarkeit und die Stabilität dieser Wasserfarben wird in der Regel hauptsächlich durch elektrostatische Wechselwirkung geladener Polymeranteile erreicht, wobei eine anionische Stabilisierung im Vordergrund steht. Kationische Bindemittel hingegen spielen bislang kaum eine Rolle trotz aller Vorteile, die sich bei der Herstellung als auch bei der nachträglichen Entfernung des Bindemittels durch Deinken bieten.

So beschreibt z.B. DE 41 15 731 Wasserfarbkompositionen, die durch anteilige Verwendung von kationischen Harzen eine verbesserte Deinkbarkeit aufweisen sollen. Die Farben werden durch Vermischen handelsüblicher Acrylharze mit Zusatzkomponenten erzeugt.

Weiterhin werden in DE 32 32 660 wäßrige Beschichtungsmassen beschrieben, die durch Vermischen kationischer Harze mit lipophilen Polymeren erhalten werden. Nachteilig ist hier die getrennte Herstellung der Einzelkomponenten und die Dispersionsstabilität, die nur durch Zusatz eines weiteren amphoteren Harzes erreicht wird.

Es war Aufgabe der vorliegenden Erfindung, neue Polymermischungen und lösungsmittelfreie wäßrige Dispersionen solcher Polymermischungen mit kationischem Aufbau zu entwickeln sowie zeitgemäße Verfahren zu deren Herstellung. Diese Aufgabe wurde erfindungsgemäß gelöst durch die Herstellung von bi- oder multimodalen Polymerblends oder wäßrigen Dispersionen durch aufeinanderfolgende Additions- und Polymerisationsmethoden. Dazu wird zunächst in einem gegenüber Polyadditionsreagentien weitgehend inerten, trotzdem aber radikalisch polymerisierbaren Lösungsmittel ein aminogruppenhaltiges Kunstharz in Form eines Epoxid-Amin Addukts aufgebaut, das nach Invertierung des Gemisches in Wasser und einem Neutralisationsmittel die Rolle des Emulgators und Stabilisators in der sich anschließenden Emulsionspolymerisation übernimmt. Dabei wird das zunächst als Lösungsmittel verwendete Monomer oder Monomergemisch im zweiten Verfahrensschritt zum Aufbau der hydrophoben Latexteilchen verwendet. Man erhält so eine stabile, völlig lösungsmittelfreie Dispersion, die im klassischen Sinne auch emulgatorfrei ist. Alternativ dazu können die ungesättigten Monomeren auch im Hart direkt bei hoher Temperatur radikalisch polymerisiert werden, wobei man einen Polymerblend erzeugt, der als Dispersionskonzentrat eingesetzt wird.

Gegenstand der Erfindung sind somit Polymermischungen aus mindestens einem aminogruppenhaltigen Polymer A) und mindestens einem Polymer B) aus ethylenisch ungesättigten Monomeren, erhalten durch Umsetzung eines Epoxids mit einem Amin in Gegenwart der ethylenisch ungesättigten Monomeren und anschließende radikalische Polymerisation.

Die erfindungsgemäßen Polymermischungen enthalten somit mindestens ein Aminogruppen enthaltendes Harz A) in Form eines Epoxid-Amin Addukts und ein Harz B) in Form hydrophober Latexteilchen, das in Wasser nicht oder nur geringfügig löslich ist, wobei das Harz A) zumindest teilweise protoniert ist, wenn die Polymermischung als Dispersion vorliegt.

Die Epoxid-Amin Addukte des Harztyps A) enthalten mindestens eine Aminogruppe pro Molekül. Die untere Grenze der Aminzahl sollte bevorzugt 40, besonders bevorzugt 100, die obere Grenze dagegen sollte bevorzugt bei 400, besonders bevorzugt bei 300 liegen. Beispiele für solche Epoxid-Amin Addukte sind Umsetzungsprodukte von epoxidgruppenhaltigen Harzen mit vorzugsweise endständigen Epoxidgruppen aus den Gruppen Polyglycidylether, Polyglycidylester und Polyglycidylamine mit gesättigten und/oder ungesättigten sekundären und/oder primären Aminen bzw. Aminoalkoholen. Diese können am Alkylrest durch mindestens eine primäre und/oder sekundäre Hydroxylgruppe, durch die Dialkylaminogruppe und/oder durch eine primäre Aminogruppe, die durch Ketiminbildung vorübergehend geschützt wird, modifiziert sein.

Die erfindungsgemäßen Epoxidverbindungen haben im Mittel mindestens eine, bevorzugt zwei 1,2-Epoxidgruppen pro Molekül. Sie können sowohl gesättigt als auch ungesättigt sowie aliphatisch, cycloaliphatisch, aromatisch und heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Äthergruppierungen oder ähnliche.

Derartige Epoxidverbindungen sind z.B. Polyglycidylether von mehrwertigen Phenolen, beispielsweise aus Resorcin, Hydrochinon, aus 4,4'-Dihydroxydiphenylmethan oder aus Isomerengemischen des Dihydroxydiphenylmethans (Bisphenol F), aus 4,4'-Dihydroxy-3,3'-dimethyl-diphenylmethan, aus 2,2-Bis-(4'-hydroxyphenyl-)propan (Bisphenol A), aus 4,4'-Dihydroxydiphenylcyclohexan, aus 4,4'-Dihydroxy-3,3'-dimethyldiphenylpropan, aus 4,4'-Dihydroxybiphenyl, aus 4,4'-Dihydroxydiphenylsulfon, aus Tris-(4-hydroxyphenyl)-methan, aus 4,4'-Dihydroxybenzophenon, Bis-(4'-hydroxyphenyl)-1,1-isobutan, Bis-(4'-hydroxy-tert.-butylphenyl)-2,2-propan, Bis-(2-hydroxynaphthyl)-methan, 1,5-Dihydroxynaphthalin, Bis-(4-hydroxyphenyl)-ether; ferner aus den Hydrierungs-, Chlorierungs- und Bromierungsprodukten der vorstehend genannten Verbindungen und aus Novolaken (d.h. aus Umsetzungsprodukten von ein- oder mehrwertigen Phenolen mit Aldehyden, insbesondere Formaldehyd in Gegenwart saurer Katalysatoren).

Auch die Polyglycidylether von mehrwertigen Alkoholen sind geeignet. Als Beispiele derartiger mehrwertiger Alkohole seien Ethylenglykol, Diethylenglykol, Triethylenglykol, 1,2-Propylenglykol, 1,4-Propylenglykol, 1,5-Pentandiol, 1,2,6-Hexantriol, Glycerin, Trimethylolpropan und Bis-(4-hydroxycyclohexyl)-2,2-propan genannt.

Unter Polyglycidylether im Rahmen dieser Erfindung werden vorzugsweise solche Polyglycidylether der allgemeinen Formel

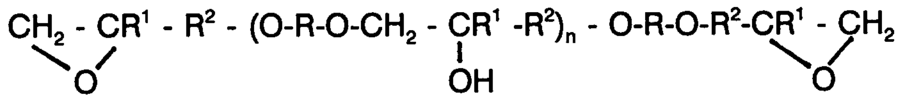

mit

R =

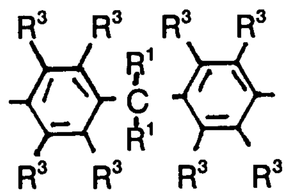

mit

$R^1$ = -H und/oder $-C_mH_{2m}+1$

$R^2$ = $-(CR^1)_m-$, bevorzugt $-CH_2-$

$R^3$ = $-R^1$, Halogen oder bevorzugt -H

n = 0 bis 8, bevorzugt 1 bis 6

m = 1 bis 8, bevorzugt 1

verstanden.

Diese Polyglycidylether haben eine mittlere Molmasse (Mn) von etwa 200 bis 10000, bevorzugt 300 bis 5000 g/mol, und ein Epoxid-Äquivalentgewicht von etwa 120 bis 5000, bevorzugt 170 bis 2500 g/mol. Solche Harze sind Umsetzungsprodukte von Epichlorhydrin oder Methylepichlorhydrin mit Dihydroxydiphenylmethan (Bisphenol F) oder Dihydroxy-diphenylpropan (Bisphenol A), sowie mit Dihydroxy-benzophenon oder Dihydroxy-naphthalin. Polyepoxide mit geeignetem Molekulargewicht werden entweder durch Auswahl der Mol-Verhältnisse von Bisphenol und Epichlorhydrin oder durch Reaktion der monomeren Diglycidylverbindungen mit weiterem Bisphenol unter Zusatz von Katalysatoren wie Lewis-Säuren oder Phosphoniumsalzen hergestellt.

Die Epoxidharze können vollständig oder teilweise hydriert sein oder in Gemischen mit unterschiedlicher Struktur und Molmasse eingesetzt werden. Weiterhin kann zum Elastifizieren ein Teil des beschriebenen Polyglycidylethers durch aliphatische Polyglycidylether der Formel

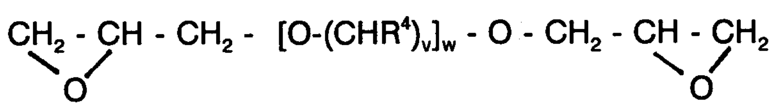

ersetzt werden, wobei

$R^4$ = H oder ein gegebenenfalls substituierter $C_1$-$C_4$- Alkylrest ist und

v = 2 bis 6 und

w = 5 bis 50

bedeutet. Beispiele sind Bisglycidylether aus Polypropylenglykol oder Polybutylenglykol mit verschiedenem Molekulargewicht. Die Epoxidharze können auch durch Reaktion mit langkettigen Polyalkoholen wie Hexandiol-1.6, Neopentylglykol, bisethoxyliertes Neopentylglykol, Hydrorypivalinsäure-neopentylglykolester und

Bis(hydroxymethyl)-cyclohexan, Monoanhydro-pentaerythrit sowie Polytetrahydrofurandiol, Polycaprolactondiol, Polycaprolactamdiol oder Polybutadiendiol in Gegenwart von geeigneten basischen oder sauren Katalysatoren wie Borfluorid-Amin-Komplexen modifiziert werden. Während Polyalkohole mit primären OH-Gruppen sich bei geeigneter Katalyse direkt mit Polyglycidylethern umsetzen lassen, werden sekundäre OH-Gruppen zunächst mit Diisocyanat umgesetzt. Das erhaltene NCO-terminierte Reaktionsprodukt kann dann ohne Schwierigkeiten als Brücke zwischen 2 Mol Polyglycidylether unter Vergrößerung des Molekulargewichts und der Funktionalität eingebaut werden.

Weiter kommen als Epoxid-Verbindungen (Poly)glycidylester der Formel

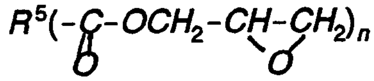

in Frage, in denen $R^5$ ein linearer oder verzweigter, gesättigter oder ungesättigter Kohlenwasserstoffrest mit bis zu 40, vorzugsweise bis zu 10 Kohlenstoffatomen oder ein gegebenenfalls substituierter Phenylrest ist und n mindestens 2, vorzugsweise 2 bis 5 bedeutet. Solche Polyglycidylester von Polycarbonsäuren erhält man durch die Umsetzung von Epichlorhydrin oder ähnlichen Epoxyverbindungen mit einer aliphatischen, cycloaliphatischen oder aromatischen Polycarbonsäure, wie Oxalsäure, Adipinsäure, Glutarsäure, Terephthalsäure, Hexahydrophthalsäure, 2,6-Naphthalindicarbonsäure und dimerisierte Fettsäuren. Beispiele hierfür sind Terephthalsäurediglycidylester und Hexahydrophthalsäurediglycidylester.

Als Epoxidgruppen enthaltende Harze kommen auch Epoxidverbindungen in Frage, deren Epoxidgruppen teilweise mit Aminen umgesetzt werden. Solche Amino-Epoxidharze können zum Senken der Aminzahl auch mit gesättigten oder ungesättigten Polycarbonsäuren und/oder Hydroxyalkylcarbonsäuren weiter modifiziert sein. Aliphatische, cycloaliphatische und/oder aromatische Polycarbonsäuren verschiedener Kettenlänge sind beispielsweise Adipinsäure, Sebacinsäure, Fumarsäure, Isophthalsäure und dimere Fettsäuren. Als Hydroxyalkylcarbonsäuren werden Milchsäure, Dimethylolpropionsäure oder auch carboxyl- und hydroxylgruppenhaltige Polyester verstanden. Bei der Umsetzung von überschüssigem Polyglycidylether mit niedrigem Molekulargewicht mit Polycarbonsäuren und/oder Polyalkoholen werden als Zwischenstufe modifizierte Polyglycidylether erhalten, die dann weiter mit Aminen und/oder Aminoalkoholen reagieren.

Es können auch heterocyclische Polyepoxidverbindungen verwendet werden, wie 1,3-Diglycidyl-5.5-dimethylhydantoin, Triglycidylisocyanurat oder Diepoxide aus Bisimiden. Eine andere geeignete Klasse von Polyepoxiden sind Polyglycidylether von phenolischen Novolakharzen, wodurch die Funktionalität von 2 bis auf etwa 6 Glycidylgruppen pro Molekül gesteigert werden kann. Durch Defunktionalisieren mit langkettigen Alkylphenolen wie Dodecylphenol können zusätzlich elastifizierende Elemente eingebaut werden.

Weitere geeignete Epoxidverbindungen sind in dem Handbuch "Epoxidverbindungen und Epoxidharze" von A.M. Paquin, Springer Verlag, Berlin 1958, Kapitel IV, in Lee, Neville "Handbook of Epoxy Resins", 1967, Chapter 2 und in Wagner/Sarx, "Lackkunstharze", Carl Hanser Verlag (1971), S. 174 ff. beschrieben.

Das Einführen der Aminogruppen erfolgt durch Addition von NH-reaktiven Verbindungen an die Epoxidgruppe. Als NH-reaktive Verbindungen werden verwendet primäre Monoamine wie Methylamin, Ethylamin, Propylamin, iso-Propylamin, Butylamin, iso-Butylamin, 2-Aminobutan, 4-Aminobutanol-2, Amylamin, Pentylamin, 3-Methylbutylamin, Heptylamin, Octylamin, 2-Ethylhexylamin, Isononylamin, Isotridecylamin, 2-Amino-methyl-1-propanol, Monoethanolamin, Methoxypropylamin, Kokosfettamin, Oleylamin, Stearylamin, Talgfettamin, Decylamin, Dodecylamin, Tetradecylamin, Hexadecylamin, Octadecylamin, Cyclopentylamin, Cyclohexylamin, 3-Methoxypropylamin, 3-Ethoxypropylamin, 3-Butoxypropylamin, 3-Isononyloxypropylamin und oder Diamine wie N-Cyclohexyl-1,3-propylendiamin,3-Dimethylaminopropylamin, 2-Diethylaminoethylamin, Dimethylaminoneopentylamin und dergleichen oder sekundäre Monoamine wie Dialkylamine, Monoalkylhydroxyalkylamine oder Dihydroxyalkylamine. Beispiele für solche Verbindungen sind Dimethylamin, Diethylamin, Dipropylamin, Di-isopropylamin, Dibutylamin, Di-isobutylamin, Di-sek-butylamin, N-Methylbutylamin, N-Methylaminoethanol, Diethanolamin, Dipentylamin, Dioctylamin, Di-(2-ethylhexyl)amin, Di-isononylamin, N-Ethylbutylamin, N-Ethylcyclohexylamin, Dicyclohexylamin, Distearylamin, Dikokosamin, Ditalgfettamin oder auch cyclische Amine, wie Morpholin, Pyrrolidin oder Oxazolidin oder ggf. substituiertes Anilin. Weiterhin können primäre Amine der allgemeinen Formel

$$H_2N\text{-}CR^1R^2\text{-}R^3\text{-}O(CHR^4\text{-}CHR^5O)_nR^6$$

oder Diamine der allgemeinen Formel

$H_2N\text{-}CR^1R^2\text{-}R^3\text{-}O(CHR^4\text{-}CHR^5O)_n\text{-}R^3\text{-}CR^1\text{-}R^2\text{-}NH_2$

eingesetzt werden.

In dieser Formel stehen $R^1$ und $R^2$ für Wasserstoff, Alkyl- oder $-CH_2OH$ Gruppen, $R^3$ steht für einen linearen oder verzweigten Alkylenrest, insbesondere für einen Alkylenrest mit 1 bis 3 Kohlenstoffatomen, $R^4$ und $R^5$ stehen für Wasserstoff oder Alkylreste mit 1 bis 4 Kohlenstoffatomen, $R^6$ steht für Wasserstoff, einen Alkyl-, Cycloalkyl- oder Phenylrest, vorzugsweise für einen Alkylrest mit 1 bis 6 Kohlenstoffatomen und n = 0-5. Als Beispiele für solche Monoamine werden genannt: Ethanolamin, Propanolamin, Butanolamin, Ethylenglykol(2-amino-ethyl)ether ($H_2N\text{-}CH_2\text{-}CH_2\text{-}O\text{-}CH_2\text{-}CH_2\text{-}OH$) und Diethylenglykolmono(3-amino-propyl)ether ($H_2N\text{-}(CH_2)_3\text{-}O\text{-}CH_2\text{-}CH_2\text{-}O\text{-}CH_2\text{-}CH_2\text{-}OH$). Beim Einsatz der primären Amine reagiert das Amin mit der Epoxidgruppe in Abhängigkeit von den angebotenen stöchiometrischen Verhältnissen unter Molekülvergrößerung. Als Beispiel für

Diamine werden genannt: Jeffamine® M-Serie, Jeffamine® D-Serie und Jeffamine® ED-Serie.

Weiterhin kommen Di- oder Triamine mit primären und/oder sekundären Aminogruppen in Frage, wie z.B. Laurylpropylendiamin, Talgfettpropylendiamin. Mit sekundären Diaminen tritt eine Kettenverlängerung ein. Als sekundäre Diamine, bevorzugt sind langkettige Diamine, werden beispielsweise N,N'-Dialkyldiaminoalkane, wie z.B. N,N'-Bis(isohexyl)-1,6-diaminohexan, N,N'-Bis(isohexyl)isophorondiamin, N,N'-Bis-(isohexyl)-dimethylhexamethylendiamin, N,N'-Bis(isohexyl)-2-methylpentamethylendiamin, N,N'-Bis-(isohexyl)ethylendiamin und N,N'-Bis(isohexyl)-di(4-aminocyclohexyl)methan oder Umsetzungsprodukte von Monoepoxiden wie etwa gesättigten Glycidylethern oder -estern oder Epoxyalkanen mit primären Diaminoalkanen verwendet, wie das Additionsprodukt von Hexandiamin-1.6 mit 2 Mol Glycidylester der Versaticsäure ($\alpha$-verzweigte Monocarbonsäuren, besonders mit $C_9\text{-}C_{11}$). Als Monoepoxide können für diesen Zweck auch gesättigte oder ungesättigte Glycidylether oder $\alpha$-Epoxide verschiedener Kettenlänge wie Dodecylen-1,2-oxid oder Butylenoxid eingesetzt werden. Ebenso können Umsetzungsprodukte von primären Monoaminen mit derartigen epoxidgruppenhaltigen Verbindungen als Substitut für die sekundäre Amine eingesetzt werden.

Weiterhin können aliphatische, sekundäre Diamine auf Basis von Propylenoxid-Addukten von Diolen oder Triolen, wie z.B. Novamin® N-Typen verwendet werden.

Die Molverhältnisse zwischen epoxid- und aminogruppenhaltigen Verbindungen sind so zu wählen, daß der vollständige Einbau der Epoxide gewährleistet ist. Neben der kettenverlängernden Wirkung der primären Amine kann auch die anteilige Bildung von sekundären Aminogruppen aus ihrem Umsatz mit Epoxiden zur Erhöhung der Aminzahl genutzt werden. Es können alle Amine gleichzeitig mit den Epoxidgruppen umgesetzt oder es kann stufenweise vorgegangen werden. Es können so auch Gemische aus verschiedenen Epoxid-Amin-Addukten erhalten werden. Die Reaktion der Amine beginnt schon bei Raumtemperatur und ist im allgemeinen exotherm. Um eine vollständige Umsetzung zu erreichen, ist es in der Regel notwendig, die Temperatur zeitweise auf etwa 50 bis 170 °C zu erhöhen.

Das epoxidgruppenhaltige Harz wird vor Zugabe des Amins in ethylenisch ungesättigten Verbindungen, wie a) Acryl- oder Methacrylsäureestern, b) Vinylaromaten, c) Vinylestern oder in Gemischen der genannten Verbindungen gelöst.

Von den Monomeren der Gruppe a) kommen vorzugsweise Acryl- oder Methacrylsäureester von 1 bis 18 Kohlenstoffatome enthaltenden Monoalkoholen, vorzugsweise n-Butylacrylat, Isobutylacrylat, 2-Ethylhexylacrylat, insbesondere Methylmethacrylat in Betracht. Von den Monomeren der Gruppe b) kommen in Frage Styrol, Vinyltoluol, $\alpha$-Methylstyrol oder höher substituierte Styrole, wie z.B. 2,4-Dimethylstyrol. Bevorzugt sind insbesondere Styrol, Vinyltoluol und $\alpha$-Methylstyrol. Von den Monomeren der Gruppe c) kommen vorzugsweise Vinylester von 2 bis 15 Kohlenstoffatome enthaltenden Monocarbonsäuren, wie z.B. Vinylacetat, Vinylpropionat, Vinylpivalat, Vinylversatat in Betracht.

Die hydrophoben Harze B) sind Copolymerisate der zuvor genannten ethylenisch ungesättigten Verbindungen, die entweder nach einem Hochtemperaturverfahren bei 120-220 °C (Variante I) oder einem Verfahren bei Temperaturen von 5 - 95 °C (Variante II) oder einer Kombination aus Hoch- und Tieftemperaturfahrweise (Variante III) erhalten werden.

**Variante I (Dispersionskonzentrate):**

Hierbei werden Epoxid-Amin Addukte A) in Gegenwart der oben genannten ungesättigten Monomeren im Gewichtsverhältnis Epoxid-Amin Addukt zu Monomer von 1 : 50 bis 50 : 1, bevorzugt 1 : 15 bis 15 : 1, im Temperaturbereich von 50 bis 170 °C aufgebaut. Diese werden anschließend bei 120-220 °C, bevorzugt bei 135-175 °C, radikalisch polymerisiert. Man erhält einen Kunstharz-Polymerblend, der beim Versetzen mit Wasser und einem Neutralisationsmittel feinteilige Dispersionen liefert. Die Initiierung der

Polymerisation erfolgt in der Regel durch bekannte thermisch zerfallende Radikalbildner wie Azoverbindungen, Peroxide, Persäureester oder Hydroperoxide. Die Molekulargewichte (Gewichtsmittel Mw) des Harzes A) liegen, bestimmt nach der Gelpermeationschromatographie-Methode, zwischen 500 und 6000 g/mol, die des Harzes B) zwischen 10000 und 100000 g/mol.

**Variante II (Dispersionen über Direktverfahren):**

Hierbei werden Epoxid-Amin Addukte A) in Gegenwart der oben genannten Monomeren im Gewichtsverhältnis Epoxid-Amin Addukt zu Monomer von 1 : 50 bis 50 : 1, bevorzugt 1 : 15 bis 15 : 1, besonders bevorzugt 1 : 3 bis 3 : 1 im Temperaturbereich von 50 - 170 °C aufgebaut und diese Schmelze direkt oder bei geringem Monomeranteil auch als Festharz bei Raumtemperatur bis 140 °C, bevorzugt bei 60-130 °C, mit Wasser und einem Neutralisationsmittel versetzt. Die entstandene Emulsion wird dann durch Zugabe von Radikalbildnern und gegebenenfalls weiteren Monomeren nach an sich bekannten Verfahren bei Raumtemperatur bis 98 °C, bevorzugt bei 30 bis 95 °C, polymerisiert. Die so erzeugten Dispersionen haben einen Festkörpergehalt von ca. 10 bis 70 Gew.-%. Anwendung als Radikal-Initiatoren können sowohl alle bekannten Redoxsysteme als auch thermisch zerfallende Radikalbildner wie Azoverbindungen, Peroxide, Persäureester und Hydroperoxide finden. Bevorzugt sind tert-Butylhydroperoxid /Ascorbinsäure oder Perschwefelsäuresalze. Die Molekulargewichte (Gewichtsmittel Mw) der Harze sind nach der Gelpermeationschromatographie-Methode ermittelt und liegen für das Harz A) zwischen 500 und 6000 g/mol und für das Harz B) zwischen 200000 und 2000000 g/mol.

**Variante III (Veredelung der Dispersion auf Basis Variante I):**

Eine Dispersion, hergestellt nach Variante I, wird nach weiterem Zusatz von ungesättigten Monomeren und Initiatoren nach Variante II polymerisiert. Man erhält so tri- oder multimodale Dispersionen.

Zur Feineinstellung geeigneter Molgewichte können gegebenenfalls Regler eingesetzt werden, wie z.B. Alkohole, Mercaptane oder unterphosphorige Säure. Die Polymerisationstemperaturen richten sich nach dem anzustrebenden Molekulargewichtsbereich, den verwendeten Polymerisationsinitiatoren und deren Wirkungsoptimum.

Als Neutralisationsmittel kommen allgemein sowohl organische Säuren, wie Ameisensäure, Essigsäure, Hydroxyessigsäure, Propionsäure, Buttersäure, Milchsäure, Valeriansäure, Capronsäure, Önanthsäure, Caprylsäure, Pelargonsäure, Caprinsäure, Laurinsäure, Myristinsäure, Palmitinsäure, und Stearinsäure, bevorzugt Ameisensäure, Essigsäure und Milchsäure, als auch anorganische Säuren, wie Phosphorsäure, Schwefelsäure, Borsäure und Chlorwasserstoffsäure in Frage.

Zur Herstellung stabiler, feinteiliger Dispersionen ist die Einstellung eines bestimmten Neutralisationsgrades erforderlich, der im allgemeinen zwischen 20 und 120 %, bevorzugt 45 und 110 %, bezogen auf die vorhandenen Aminogruppen liegt.

Bei der Verwendung der erfindungsgemäßen Dispersionen als Bindemittel für Druckfarben und Drucklacke beträgt deren Feststoffgehalt im allgemeinen 5 bis 75 %.

Für die Herstellung von Stammfarben werden 5 - 65 %ige wäßrige Mischungen mit einem Polymer A) zu Polymer B) Verhältnis von 50 : 1 bis 1 : 1, bevorzugt 50 : 1 bis 15 : 1, verwendet. Das Verhältnis der Polymermischungen zu Pigment kann zwischen 20 : 80 und 80 : 20, bevorzugt zwischen 30 : 70 und 70 : 30, besonders bevorzugt zwischen 40 : 60 und 60 : 40, betragen. Die Anreibeoperationen werden dann mit Festkörpergehalten von 10 - 60 %, bevorzugt 20 - 50 %, besonders bevorzugt 30 - 40 %, durchgeführt. Die so erzeugten Stammfarben werden anschließend mit 5 - 65 %igen Dispersionen, die ein Polymer A) zu Polymer B) Verhältnis von 1 : 50 bis 1 : 1, bevorzugt 15 : 1 besitzen, vermischt und so Farben erzeugt, die einen Festkörper von idealerweise 10 - 45 %, bevorzugt 20 - 35 %, und einen Pigmentgehalt von idealerweise 2-20 %, bevorzugt 3 - 15 %, besitzen.

Die erfindungsgemäßen Polymermischungen eignen sich so ausgezeichnet zur Herstellung von wäßrigen, kationisch stabilisierten Bindemittelträgern für Druckfarben und ohne Pigmentierung auch für Überdrucklacke. Weiterhin können sie verwendet werden als Teilkomponenten zur Feineinstellung von Drucklack- und Druckfarbsystemen auf Wasserbasis.

Die Einarbeitung der Pigmente (wie z.B. Titandioxid, Buntpigmente, synthetische Ruße), gegebenenfalls auch der Füllstoffe (wie z.B. Talkum, Chinaclay, Wachse), Farbstoffe, Entschäumer und Verlaufsmittel kann mit den üblichen Mahl-, Misch- oder Anreibegeräte erfolgen.

## Beispiele:

Teile und Prozentangaben in den Beispielen beziehen sich, soweit nicht anders angegeben, auf Gewichte. Alle Reaktionen werden unter Schutzgas ($N_2$) durchgeführt.

### I. Allgemeine Arbeitsvorschrift für die Herstellung der Epoxid-Amin Addukte anhand Beispiel 1:

Eine Lösung eines handelsüblichen Epoxids (Beckopox® EP 140) (518,4 g) in handelsüblichem Styrol (180,4 g; stabilisiert mit ca. 20-50 ppm. p-tert.-Butylbrenzcatechin) wird hergestellt und bei 80 °C innerhalb von 70 Minuten mit Dibutylamin (78,8 g) versetzt. Man läßt 2 Stunden reagieren (80 °C), erhitzt und gibt bei konstant 120 °C innerhalb von 30 Minuten Dimethylaminopropylamin (124,4 g) hinzu (zeitweise Kühlen erforderlich). Zur Vervollständigung der Reaktion läßt man noch 2 Stunden bei 120 °C rühren und kühlt ab.

In analoger Weise wurden die Epoxid-Amin Addukte der Beispiele 2 bis 4 hergestellt.

| Bsp. | Bis-glycidyl-ether A | Amin 1 B | Amin 2 C | Lösungs-mittel D | A:B:C Molverhält-nis (ca.) | [A+B+C]:D Massenver-hältnis (ca.) |
|---|---|---|---|---|---|---|
| 1 | EP 140 | Dibutyl-amin | DMAPA | Styrol | 5:2:4 | 80:20 |
| 2 | EP 140 | " | " | " | 5:2:4 | 90:10 |
| 3 | EP 301 | " | " | " | 5:2:4 | 80:20 |
| 4 | EP 301 | DOLA | " | " | 3:2:2 | 80:20 |

EP 140 = Handelsübliches Polyepoxid-Harz Beckopox® EP 140 100 %ig, flüssig Epoxid-Äquivalentgewicht 180-192

EP 301 = Handelsübliches Polyepoxid-Harz Beckopox® EP 301 100 %ig, fest Epoxid-Äquivalentgewicht 450-525

DOLA = Diethanolamin

DMAPA = Dimethylaminopropylamin

**II. Allgemeine Arbeitsvorschrift für die Herstellung der Polymerblends anhand Beispiel 5:**

Eine Lösung von Beckopox® EP 140(136,2 g) und Beckopox® EP 301 (178,2 g) in handelsüblichem Styrol (101,7 g; stabilisiert mit ca. 20-50 ppm. p-tert.Butylbrenzcatechin) wird hergestellt und bei 80 °C

innerhalb von 60 Minuten mit Dibutylamin (51,7 g) versetzt. Man läßt 2 Stunden reagieren (80 °C), erhitzt und gibt bei konstant 120 °C innerhalb von 10 Minuten Dimethylaminopropylamin (40,9 g) hinzu und erhitzt anschließend auf 150 °C. Bei Erreichen von 150 °C wird mit Di-tert.-Butylperoxid (0,5 g) versetzt, weitere 3 Stunden bei 150 °C gerührt, anschließend die Temperatur der Reaktionsmasse auf 160 °C erhöht und im Vakuum flüchtige Bestandteile abgetrennt. Man erhält ein Festharz in zäher Konsistenz. Der Blend des Beispiels 6 wird analog erzeugt.

**Tabelle 2:**

| **Bsp.** | **Bis-glycidyl-ether A** | **Amin 1 B** | **Amin 2 C** | **Lösungs-mittel D** | **A:B:C Molverhält-nis (ca.)** | **[A+B+C]:D Massenver-hältnis (ca.)** |
|---|---|---|---|---|---|---|
| 5 | EP 140<br>EP 301 | Dibutyl-amin | DMAPA | Styrol | 2:1:2:2 | 80:20 |
| 6 | EP 140 | " | " | " | 5:2:4 | 80:20 |

**III. Allgemeine Arbeitsvorschrift zur Dispersionsherstellung über Emulsionspolymerisation:**

Das Produkt aus Beispiel 1 (900 g) wird bei ca. 125 °C mit einer Lösung von Ameisensäure (60 g) in entionisiertem Wasser (393 g) versetzt und weiter mit Wasser verdünnt (522 g). Die entstandene Emulsion wird bei 90 °C, unter Rühren und Parallelzugabe einer Lösung aus Ammoniumperoxodisulfat (4,52 g) in entionisiertem Wasser (247,7 g) und weiterem Styrol (330 g) in ca. 2-4 Stunden zu einem Latex auspolymerisiert. Nach einer weiteren Stunde Rühren bei 80-90 °C erhält man so eine feinteilige

Dispersion entsprechend Beispiel 7 (41 % Festkörper, Viskosität 41 mPa.s, pH = 6,4).

In analoger Weise werden die Dispersionen gemäß Beispiel 8 bis 15 erhalten.

Tabelle 3:

| Bsp. | Epoxid/-Amin-Addukt A | Neutralisationsmittel | Neutral.-grad % | Latexteilchen B | A:B ca. | Festkörper % |
|---|---|---|---|---|---|---|
| 7 | 1 | Ameisensäure | 70 | Polystyrol | 50:50 | 43 |
| 8 | 1 | Milchsäure | 70 | -"- | 50:50 | 43 |
| 9 | 1 | Ameisensäure | 70 | -"- | 80:20 | 40 |
| 10 | 1 | Ameisensäure | 70 | -"- | 50:50 | 43 |
| 11 | 1 | Ameisensäure | 60 | -"- | 50:50 | 43 |
| 12 | 2 | Milchsäure | 70 | -"- | 90:10 | 35 |
| 13 | 2 | Milchsäure | 60 | -"- | 90:10 | 35 |
| 14 | 1 | Ameisensäure | 70 | -"- | 40:60 | 43 |
| 15 | 1 | Ameisensäure | 70 | -"- | 30:70 | 43 |

**IV. Beispielvorschrift für die Herstellung eines Glanzüberdrucklackes**

Dispersion (AAV III) und Produkt aus Beispiel 6, aufgelöst in Ameisensäure/Wasser (Festkörpergehalt 30 %, der zu 80 % neutralisiert ist), wird in Anteilen von ca. 1:1 bis 2:1 und gegebenenfalls ca. 1,5 % Butyldiglycol 1 Stunde gut durchmischt. Man erhält einen Überdrucklack mit einer Druckviskosität von ca. 20 s/4 mm.

V. Beispielvorschriften für die Herstellung pigmentierter Druckfarben

**Stammfarbe-Rot:**

| | |
|---|---|
| Epoxid-Amin Harz-Lösung 25 %ig aus Resydrol® SWE 842/40 % WAS/LGEM oder Produkt aus Beispiel 6, in Ameisensäure/Wasser (Festkörpergehalt 30 %, der zu 80 % neutralisiert ist), | 117,0 |
| Permanent® Lackrot LCLL 20 | 25,0 |

Druckfarbe: 30 Teile Stammfarbe und 44 Teile Dispersion, gibt eine Druckfarbe mit Pigmentgehalt von ca. 7 % und einer Druckviskosität von ca. 25-28 s/4 mm.

**Stammfarbe-Blau:**

| | |
|---|---|
| Epoxid-Amin Harz-Lösung 25 %ig aus Resydrol® SWE 842/40 % WAS/LGEM oder Produkt aus Beispiel 6, in Ameisensäure/Wasser (Festkörpergehalt 30 %, der zu 80 % neutralisiert ist), | 111,0 |
| Hostaperm® Blau B2G | 16,0 |
| Wasser | 20,0 |

Druckfarbe: 80 Teile Stammfarbe und 40 Teile Dispersion, die nach Allgemeiner Arbeitsvorschrift III zu erhalten ist, gibt eine Druckfarbe mit Pigmentgehalt von ca. 7 % und einer Druckviskosität von ca. 25-28 s/4 mm.

## Patentansprüche

1. Polymermischungen aus mindestens einem aminogruppenhaltigen Polymer A) und mindestens einem Polymer B) aus ethylenisch ungesättigten Monomeren, erhalten durch Umsetzung eines Epoxids mit einem Amin in Gegenwart der ethylenisch ungesättigten Monomeren und anschließende radikalische Polymerisation.

2. Polymermischungen nach Anspruch 1, dadurch gekennzeichnet, daß sie in Form einer wäßrigen Dispersion vorliegen, die das Polymer A) in zumindest teilneutralisierter Form enthalten.

3. Polymermischungen nach Ansprüchen 1 und 2, dadurch gekennzeichnet, daß sie durch Polymerisation der Monomeren in Gegenwart von Wasser und einem Neutralisationsmittel erzeugt werden.

4. Polymermischungen nach Ansprüchen 1 bis 3, dadurch gekennzeichnet, daß sie erzeugt werden, indem nach der Herstellung des Polymers A) eine weitere Menge eines oder mehrerer ethylenisch ungesättigter Monomere zugegeben werden.

5. Polymermischungen nach Ansprüchen 1 bis 4, dadurch gekennzeichnet, daß sie erzeugt werden, indem nach der radikalischen Polymerisation eine weitere Menge eines oder mehrerer ethylenisch ungesättigter Monomere zugegeben wird und erneut eine radikalische Polymerisation erfolgt.

6. Verwendung der Polymermischungen nach Ansprüchen 1 bis 5 zur Herstellung von Bindemittelträgern für Druckfarben und Drucklacken auf Wasserbasis.